# EUROPEAN PATENT APPLICATION

(11) **EP 4 699 878 A1**
(43) Date of publication of application: **25.02.2026**
(21) Application number: 25800846.5
(22) Date of filing: 30.04.2025
(51) Int. Cl.: B60W 20/00, B60W 30/19, B60W 30/182, B60L 15/20

(54) **VEHICLE TORQUE CONTROL METHOD AND APPARATUS, AND DEVICE, STORAGE MEDIUM AND PROGRAM PRODUCT**

(30) Priority: 30.05.2024 CN 202410690685
(71) Applicant: Chery Automobile Co., Ltd., Wuhu, Anhui 241006 (CN)
(72) Inventor: CHEN, Zhen, Wuhu, Anhui 241006 (CN); GAO, Xingjie, Wuhu, Anhui 241006 (CN); WANG, Wei, Wuhu, Anhui 241006 (CN)
(74) Representative: Yang, Shu
(86) International application number: PCT/CN2025/092296
(87) International publication number: WO 2025/246788

(57) **Abstract**

The present disclosure provides a vehicle torque control method and apparatus, a device, a storage medium, and a program product, relating to the field of vehicle control. The method includes: determining at least one of a drive mode or a gear of a vehicle based on a driving parameter of the vehicle; in a case where the at least one of the drive mode or the gear changes, determining a first wheel-end torque change and a second wheel-end torque change based on a requested wheel-end torque, a first wheel-end torque, a second wheel-end torque, and a correction coefficient, wherein a change trend of the second wheel-end torque change is opposite to a change trend of the first wheel-end torque change; and determining a first torque adjustment step size and a second torque adjustment step size based on the first wheel-end torque change, the second wheel-end torque change, and a driving scenario, adjusting a torque of the vehicle using the first torque adjustment step size and the second torque adjustment step size, and controlling movement of the vehicle based on the adjusted torque. This method can improve the stability and safety of the vehicle during driving.

## Description

The present disclosure claims priority to Chinese Patent Application No. 202410690685.0, filed on May 30, 2024, and entitled "VEHICLE TORQUE CONTROL METHOD AND APPARATUS, DEVICE, STORAGE MEDIUM, AND PROGRAM PRODUCT", the entire disclosure of which is incorporated herein by reference.

### TECHNICAL FIELD

Embodiments of the present disclosure relate to the field of vehicle control, and in particular, relate to a vehicle torque control method and apparatus, a device, a storage medium, and a program product.

### BACKGROUND

With the rapid development of the automotive industry, hybrid electric vehicles (HEVs), as a model combining the advantages of traditional fuel-powered vehicles and battery electric vehicles (BEVs), have attracted significant market attention. Typically, multi-gear four-wheel-drive HEVs have become a market focus due to exceptional dynamic performance and adaptability.

In related art, taking multi-gear four-wheel-drive HEVs as an example, frequent switching of drive modes is often required during vehicle driving. During the drive mode switching process, due to changes in the gear of the transmission on the front drive axle, the distribution of the total wheel torque between a front traction motor (TMF) and a rear traction motor (TMR) may shift. In the process of torque redistribution and transfer, torque interruption or even power loss may occur, thereby compromising vehicle stability and safety.

### SUMMARY

Embodiments of the present disclosure provide a vehicle torque control method and apparatus, a device, a storage medium, and a program product, to improve the vehicle stability and safety. The technical solution is as follows.

According to an aspect, some embodiments of the present disclosure provide a vehicle torque control method. The vehicle torque control method includes:
determining at least one of a drive mode or a gear of a vehicle based on a driving parameter of the vehicle;
in a case where the at least one of the drive mode or the gear changes, determining a first wheel-end torque change and a second wheel-end torque change based on a requested wheel-end torque, a first wheel-end torque, a second wheel-end torque, and a correction coefficient, wherein a change trend of the second wheel-end torque change is opposite to a change trend of the first wheel-end torque change, the requested wheel-end torque is a wheel-end torque to which the vehicle is to be switched, the first wheel-end torque and the second wheel-end torque are torques corresponding to different traction motors prior to the change of the drive mode or the gear, and the correction coefficient is determined based on a driving scenario and the driving parameter of the vehicle; and
determining a first torque adjustment step size and a second torque adjustment step size based on the first wheel-end torque change, the second wheel-end torque change, and the driving scenario, adjusting a torque of the vehicle using the first torque adjustment step size and the second torque adjustment step size, and controlling movement of the vehicle based on the adjusted torque.

According to another aspect, some embodiments of the present disclosure provide a vehicle torque control apparatus. The vehicle torque control apparatus includes:
a first determination module, configured to determine at least one of a drive mode or a gear of a vehicle based on a driving parameter of the vehicle;
a second determination module, configured to: in a case where the at least one of the drive mode or the gear changes, determine a first wheel-end torque change and a second wheel-end torque change based on a requested wheel-end torque, a first wheel-end torque, a second wheel-end torque, and a correction coefficient, wherein a change trend of the second wheel-end torque change is opposite to a change trend of the first wheel-end torque change, the requested wheel-end torque is a wheel-end torque to which the vehicle is to be switched, the first wheel-end torque and the second wheel-end torque are torques corresponding to different traction motors prior to the change of the drive mode or the gear, and the correction coefficient is determined based on a driving scenario and the driving parameter of the vehicle; and
a control module, configured to: determine a first torque adjustment step size and a second torque adjustment step size based on the first wheel-end torque change, the second wheel-end torque change, and the driving scenario, adjust a torque of the vehicle using the first torque adjustment step size and the second torque adjustment step size, and control movement of the vehicle based on the adjusted torque.

According to another aspect, some embodiments of the present disclosure provide a computer device. The computer device includes a processor and a memory, wherein the memory is configured to store at least one piece of program code, wherein the at least one piece of program code, when loaded and executed by the processor, causes the computer device to perform the vehicle torque control method as described above.

According to another aspect, some embodiments of the present disclosure provide a computer-readable storage medium, storing at least one piece of program code, wherein the at least one piece of program code, when loaded and executed by a processor, causes a computer to perform the vehicle torque control method as described above.

According to another aspect, the embodiments of the present disclosure provide a computer program or computer program product, storing at least one computer instruction, wherein the at least one computer instruction, when loaded and executed by a processor, causes a computer to perform the vehicle torque control method as described above.

The technical solutions according to the embodiments of the present disclosure achieve at least the following beneficial effects:
According to the embodiments of the present disclosure, when a drive mode or a gear changes, a first wheel-end torque change and a second wheel-end torque change are determined based on a requested wheel-end torque, a first wheel-end torque, a second wheel-end torque, and a correction coefficient. The correction coefficient is determined using a driving scenario and a driving parameter, thereby obtaining more accurate correction coefficients in different driving scenarios. The change trends of the first wheel-end torque change and the second wheel-end torque change are opposite, which avoids torque interruption during the change of the gear or drive mode, thus improving the driving stability and safety of the vehicle. Furthermore, the vehicle torque is adjusted using the first torque adjustment step size and the second torque adjustment step size, such that the smoothness of the vehicle torque change process is improved to a certain extent.

### BRIEF DESCRIPTION OF DRAWINGS

To describe the technical solutions according to the embodiments of the present disclosure more clearly, the following briefly describes the accompanying drawings required for describing the embodiments. Apparently, the accompanying drawings in the following description show merely some embodiments of the present disclosure, and those of ordinary skill in the art may still derive other drawings from these accompanying drawings without creative efforts.
FIG. 1 is a schematic diagram of an implementation environment according to some embodiments of the present disclosure;
FIG. 2 is a flowchart of a vehicle torque control method according to some embodiments of the present disclosure;
FIG. 3 is a schematic diagram of a vehicle torque control process according to some embodiments of the present disclosure;
FIG. 4 is a schematic diagram of a vehicle according to some embodiments of the present disclosure;
FIG. 5 is a schematic diagram of a vehicle torque control apparatus according to some embodiments of the present disclosure;
FIG. 6 is a schematic structural diagram of a terminal device according to some embodiments of the present disclosure; and
FIG. 7 is a schematic structural diagram of a server according to some embodiments of the present disclosure.

### DETAILED DESCRIPTION

In order to make the objectives, technical solutions and advantages of the present disclosure clearer, implementations of the present disclosure will be further described in detail in combination with the accompanying drawings.

It should be noted that the terms such as "first" and "second" in the present disclosure are used to distinguish between similar objects and are not intended to describe a specific order or sequence. It should be understood that the terms used in such a way may be exchanged under proper conditions to make it possible to implement the described embodiments of the present disclosure in other sequences apart from those illustrated or described here. Implementations described in the following exemplary embodiments do not represent all implementations consistent with the present disclosure. On the contrary, the implementations are merely examples of apparatuses and methods that are described in detail in the appended claims and consistent with some aspects of the present disclosure.

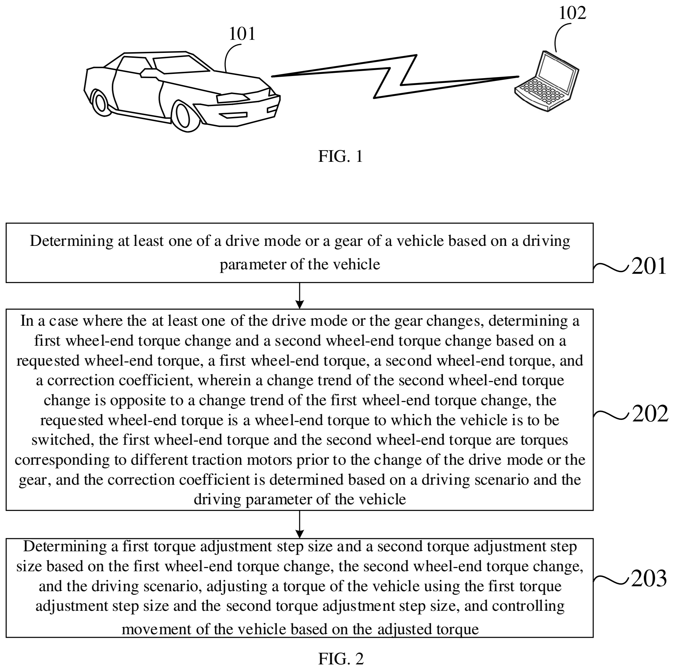

FIG. 1 is a schematic diagram of an implementation environment according to some embodiments of the present disclosure. As illustrated in FIG. 1, the implementation environment includes a vehicle 101 and a vehicle control system 102. The vehicle control system 102 is used to control the vehicle 101 to perform corresponding operations. The vehicle control system 102 may be located in the vehicle 101, for example, the vehicle control system 102 is a vehicle-mounted terminal. The vehicle control system 102 may alternatively be located outside the vehicle 101, for example, the vehicle control system 102 is a cloud control system.

The vehicle control system 102 may be an independent server, the vehicle control system 102 may be a server cluster composed of a plurality of servers that respectively realize different functions, or the vehicle control system 102 may be a cloud computing center.

The vehicle 101 is a multi-gear four-wheel-drive HEV. The vehicle 101 includes a TMF and a TMR, and at least one of the TMF or the TMR controls the vehicle to move. The TMF, installed at the front of the vehicle, is primarily responsible for providing power to the front wheels to drive the vehicle forward. The TMR, installed at the rear of the vehicle, is primarily responsible for providing power to the rear wheels to drive the vehicle forward. For example, the TMF and the TMR are capable of simultaneously controlling the vehicle to move.

The vehicle 101 may further have a communication function. A communication module supporting wireless communication technology or wired communication technology is disposed in the vehicle 101, and the vehicle 101 communicates with the vehicle control system 102 through the communication module.

Based on the implementation environment illustrated in FIG. 1, some embodiments of the present disclosure provide a vehicle torque control method. For example, the vehicle torque control method is applicable to a vehicle control system. As illustrated in FIG. 2, the vehicle torque control method may include processes 201 to 203.

In process 201, at least one of a drive mode or a gear of a vehicle is determined based on a driving parameter of the vehicle.

In some exemplary embodiments of the present disclosure, taking a multi-gear four-wheel-drive HEV as an example, the TMF and the TMR of the vehicle drive the vehicle simultaneously. The driving parameters of the vehicle are parameters related to a driving state of the vehicle, including, but not limited to a vehicle speed, an accelerator pedal position, an engine operating state, a state of charge (SOC) of a power battery, the drive mode, the gear, and a driving style. The at least one of the drive mode or the gear is determined using the driving parameters of the vehicle. A first wheel-end torque and a second wheel-end torque of the vehicle may also be determined using the driving parameter of the vehicle. The wheel-end torque refers to the torque acting on the wheels during the movement of the vehicle. The first wheel-end torque is a wheel-end torque corresponding to the TMF of the vehicle, while the second wheel-end torque is a wheel-end torque corresponding to the TMR of the vehicle.

In some embodiments of the present disclosure, the first wheel-end torque and the second wheel-end torque may be determined based on parameters such as the vehicle speed, the accelerator pedal position, the engine speed, and the gear, and obtained through a specific calculation method or by querying a wheel-end torque table. The calculation method for the first wheel-end torque and the second wheel-end torque may vary for different vehicles. The wheel-end torque table may be obtained through pre-delivery experimental testing or computational simulation of the vehicle. For example, the wheel-end torque table may include first wheel-end torques and second wheel-end torques corresponding to different vehicle speeds, accelerator pedal positions, engine speeds, and gears. During vehicle driving, the first wheel-end torque and the second wheel-end torque corresponding to current vehicle parameters may be obtained by looking up the table using real-time vehicle parameters.

In process 202, in a case where the at least one of the drive mode or the gear changes, a first wheel-end torque change and a second wheel-end torque change are determined based on a requested wheel-end torque, the first wheel-end torque, the second wheel-end torque, and a correction coefficient. A change trend of the second wheel-end torque change is opposite to a change trend of the first wheel-end torque change, the requested wheel-end torque is a wheel-end torque to which the vehicle is to be switched, the first wheel-end torque and the second wheel-end torque are torques corresponding to different traction motors prior to the change of the drive mode or the gear, and the correction coefficient is determined based on a driving scenario and the driving parameter of the vehicle.

For example, the change in the drive mode or gear may cause a change in the torque from the traction motor to the wheel end. The requested wheel-end torque is the torque desired to be applied to the wheels, obtained based on the driving intention of a driver. The driving intention of the driver includes, but is not limited to, acceleration, deceleration, cruising, and turning. Situations that trigger a gear change include, but are not limited to: the vehicle speed falling outside a speed threshold range, or a change in the slope gradient of the road surface on which the vehicle is traveling exceeding or being equal to a slope gradient change threshold.

The driver intention is determined using the driving parameters of the vehicle. For example, a change in the accelerator pedal position and a change in the gear reflect the driver intention to accelerate, while a change in the brake pedal position and a change in the gear reflect the driver intention to decelerate, and a change in the steering wheel angle reflects the driver intention to turn. After determining the driver intention, a base torque is calculated based on the product of the vehicle speed, the accelerator pedal opening, and the gear. The base torque is then adjusted according to the driver intention to obtain the requested wheel-end torque.

Different driver intentions may correspond to different types of adjustment parameters. Once the driver intention is determined, the magnitude of the adjustment parameter corresponding to the driver intention is further determined based on the driving parameter. For example, when the rate of change in the pedal position exceeds a change threshold, a torque adjustment parameter is determined based on the amount by which the change threshold is exceeded. A greater excess leads to a larger torque adjustment parameter. The requested wheel-end torque is subsequently obtained by calculating the product of the base torque and the torque adjustment parameter.

The change of the drive mode includes, but is not limited to, at least one of the following: the drive mode of the vehicle changes from single-group traction motor driving to two-group traction motor driving, the drive mode of the vehicle changes from two-group traction motor driving to single-group traction motor driving, or any traction motor fails. For example, the two groups of traction motors drive the front and rear wheels respectively, with each group including at least one traction motor. The following description is provided using an example in which each group of traction motors includes one traction motor.

For example, the current drive mode is a single traction motor drive mode. The drive mode of the vehicle changes from single traction motor driving to dual traction motor driving when detecting that the requested wheel-end torque exceeds a torque threshold range, the battery SOC of the vehicle exceeds a SOC threshold range, the engine operating status of the vehicle changes, or a change in the slope gradient of the road surface on which the vehicle is traveling is greater than or equal to the slope gradient change threshold. Alternatively, the current drive mode is a dual traction motor drive mode. The drive mode of the vehicle changes to single traction motor driving when detecting a failure in one traction motor of the vehicle.

A change in the gear or drive mode may both result in a change in the wheel-end torque. That is, the requested wheel-end torque is not equal to the sum of the first wheel-end torque and the second wheel-end torque. For example, any of the following conditions may trigger a torque adjustment mechanism: the vehicle speed is below a minimum speed threshold or above a maximum speed threshold; the requested wheel-end torque is below a minimum torque threshold or above a maximum torque threshold; the battery SOC of the vehicle is lower than a minimum SOC threshold or higher than a maximum SOC threshold; or the slope gradient of the road surface (uphill or downhill) on which the vehicle is driving changes significantly. For example, on a steep uphill slope, the vehicle switches from single traction motor driving to dual traction motor driving, to enhance the dynamic performance and gradeability of the vehicle.

When the change in the drive mode triggers the torque adjustment mechanism, that is, changing from driving the vehicle with single traction motor to driving the vehicle with dual traction motors, or changing from driving the vehicle with dual traction motors to driving the vehicle with single traction motor, the torque is transmitted to the wheels via a single or dual transmission path, enabling independent or coordinated control of the wheel torque.

In some exemplary embodiments of the present disclosure, when the driver controls the vehicle to change the drive mode or gear, the torque transmitted from the TMF to the wheel end and the torque transmitted from the TMR to the wheel end need to be adjusted. A target gear or target drive mode is determined based on the driving parameter of the vehicle. A wheel-end torque corresponding to the target gear or target drive mode is the requested wheel-end torque. The target gear refers to the gear the driver is about to switch to, and the target drive mode refers to the drive mode the driver is about to switch to. For example, the target gear is determined based on parameters such as the accelerator pedal position and the vehicle speed. In a case where the accelerator pedal is depressed further, the target gear may be lower than a current gear of the vehicle; or in a case where the vehicle speed increases, the target gear may be higher than the current gear of the vehicle.

In a case where the driving parameter of the vehicle meets the conditions for a gear change or drive mode change, a hybrid control unit (HCU) transmits the target gear or target drive mode to a transmission control unit (TCU). The TCU then initiates torque intervention for gear change. Alternatively, in a case where the TCU detects a discrepancy between the target gear and an actual gear, or between the target drive mode and an actual drive mode, the TCU initiates torque intervention.

It should be noted that examples in which the change in the gear or drive mode triggers wheel-end torque intervention are used for description in the present disclosure. Other conditions for wheel-end torque intervention may be established based on the actual conditions of the vehicle, and this is not limited in the present disclosure.

Prior to the TCU initiating torque intervention, the first wheel-end torque change and the second wheel-end torque change may also be determined based on the requested wheel-end torque, the first wheel-end torque, the second wheel-end torque, and a first torque change threshold. This process may include the following processes 2021 and 2022.

In process 2021, a third wheel-end torque change and a fourth wheel-end torque change are determined based on the requested wheel-end torque, the first wheel-end torque, the second wheel-end torque, and the first torque change threshold.

For example, a total amount of the wheel-end torque change is determined based on the requested wheel-end torque, the first wheel-end torque, and the second wheel-end torque. The total amount of the wheel-end torque change is equal to the requested wheel-end torque minus the sum of the first wheel-end torque and the second wheel-end torque. The total amount of the wheel-end torque change is jointly accomplished by the TMF and the TMR of the vehicle. The first torque change threshold is less than or equal to the maximum value of the torque change corresponding to the TMF and the TMR, and is less than or equal to the torque from the TMF to the wheel end or the torque from the TMR to the wheel end.

The third wheel-end torque change (change of the torque from the TMF to the wheel end) and the fourth wheel-end torque change (change of the torque from the TMR to the wheel end) are determined using the total amount of wheel-end torque change and the first torque change threshold. The third wheel-end torque change and the fourth wheel-end torque change are initial values of the wheel-end torque change, and the sum of the third wheel-end torque change and the fourth wheel-end torque change is the total amount of the wheel-end torque change. The sum of the torque from the TMF to the wheel end and the third wheel-end torque change is less than the maximum value of the torque corresponding to the TMF, and the sum of the torque from the TMR to the wheel end and the fourth wheel-end torque change is less than the maximum value of the torque corresponding to the TMR.

The embodiments of the present disclosure, by preliminarily limiting the wheel-end torque change, help mitigate potential safety hazards such as wheel slip or loss of vehicle control caused by excessive wheel-end torque changes, thereby enhancing driving safety of the vehicle.

In some exemplary embodiments of the present disclosure, prior to correcting the third wheel-end torque and the fourth wheel-end torque, a first correction factor and a second correction factor may be determined based on the driving scenario and the driving parameter of the vehicle, and the correction coefficient is determined using the first correction factor and the second correction factor.

In some embodiments of the present disclosure, the driving scenario of the vehicle includes the driving road environment, and different driving scenarios correspond to different driving road environments. For example, driving scenarios include, but are not limited to, driving in rainy or snowy weather, and driving on dry or muddy road surfaces. Because different driving scenarios affect the wheel-end torque change to different degrees, different driving scenarios correspond to different first correction factors. The first correction factor is obtained based on experimental data or simulation analysis corresponding to the vehicle.

For example, on slippery road surfaces, the torque distribution to the TMR needs to be increased to enhance the vehicle stability and handling. Therefore, the corresponding first correction factor may be determined based on the driving scenario.

In some embodiments of the present disclosure, the driving parameters include, but are not limited to, the drive mode (such as economy mode, sports mode, and snow mode), vehicle speed, steering angle, acceleration, and battery SOC and temperature. The vehicle state is determined using the driving parameter, and different vehicle states correspond to different second correction factors. The second correction factor is obtained based on experimental data or simulation analysis corresponding to the vehicle.

For example, in a case where it is determined, based on the driving parameter like the vehicle speed and acceleration, that the vehicle is shifting from a low gear to a high gear, the wheel-end torque corresponding to the TMF is increased to provide greater traction at the front wheels to propel the vehicle forward more quickly, thereby improving acceleration performance. In this case, to maintain vehicle stability, the wheel-end torque corresponding to the TMR needs to be reduced. The corresponding second correction factor is determined based on the driving parameter.

Because the first correction factor and the second correction factor affect the wheel-end torque change in different degrees, different weights are assigned to the first correction factor and the second correction factor, and corresponding correction sub-coefficients are obtained by multiplying each correction factor by the corresponding weight. The final correction coefficient is obtained by summing the correction sub-coefficients.

It should be noted that the method for determining the correction coefficient described in the present disclosure is exemplary. The correction coefficient may alternatively be determined based on the actual conditions of the vehicle, and this is not limited in the present disclosure.

In process 2022, the first wheel-end torque change and the second wheel-end torque change are acquired by correcting the third wheel-end torque change and the fourth wheel-end torque change based on the correction coefficient.

For example, the correction coefficient includes two coefficients, which respectively correct the changes of the torque from the TMF to the wheel end and the torque from the TMR to the wheel end of the vehicle. After obtaining the correction coefficient, the third wheel-end torque change and the fourth wheel-end torque change are corrected using the correction coefficient. For example, the third wheel-end torque change and the fourth wheel-end torque change each are multiplied by the corresponding correction coefficient to obtain the first wheel-end torque change and the second wheel-end torque change.

In some embodiments, after correcting the third wheel-end torque change and the fourth wheel-end torque change using the correction coefficients, the corrected wheel-end torque of the TMF and the corrected wheel-end torque of the TMR may also be considered. For example, after correcting the third wheel-end torque change and the fourth wheel-end torque change using the correction coefficients, a first preliminary wheel-end torque and a second preliminary wheel-end torque are obtained. The first preliminary wheel-end torque is a sum of the torque from the TMF to the wheel end of the vehicle and the corrected third wheel-end torque change. The second preliminary wheel-end torque is a sum of the torque from the TMR to the wheel end of the vehicle and the corrected fourth wheel-end torque change. The third wheel-end torque change and the fourth wheel-end torque change each include a sign and a numerical value. The sign includes "+" and "-". "+" indicates an increasing trend in the wheel-end torque, and "-" indicates a decreasing trend in the wheel-end torque. The value of the increase or decrease in the wheel-end torque represents the numerical value of the third wheel-end torque change or the fourth wheel-end torque change. In a case where the difference between the first preliminary wheel-end torque and the second preliminary wheel-end torque is greater than or equal to a preset torque threshold, the correction coefficient is further adjusted until the difference between the first preliminary wheel-end torque and the second preliminary wheel-end torque is less than the preset torque threshold.

By constraining the difference between the first preliminary wheel-end torque and the second preliminary wheel-end torque, the disparity between the front wheel torque and the rear wheel torque is reduced, thereby enhancing the vehicle balance and stability during driving.

In a case where the difference between the first preliminary wheel-end torque and the second preliminary wheel-end torque is less than the preset torque threshold, at least one of the third wheel-end torque change or the fourth wheel-end torque change is corrected using the correction coefficient, to obtain the first wheel-end torque change and the second wheel-end torque change.

In some exemplary embodiments of the present disclosure, the third wheel-end torque change and the fourth wheel-end torque change are corrected using the correction coefficient, to obtain the first wheel-end torque change and the second wheel-end torque change. This improves the accuracy of the first wheel-end torque change and the second wheel-end torque change, thereby enhancing vehicle stability and safety across varying driving scenarios, and effectively improving the driving experience.

For example, during the determination of the first wheel-end torque change and the second wheel-end torque change, the change trend of the second wheel-end torque change is opposite to that of the first wheel-end torque change, and the change in a sum of the first wheel-end torque change and the second wheel-end torque change is less than or equal to a second torque change threshold.

For example, during the change of the gear or drive mode, when the wheel-end torque of the TMF increases, the wheel-end torque of the TMR decreases; or when the wheel-end torque of the TMF decreases, the wheel-end torque of the TMR increases. The change in the wheel-end torque of the TMF is the first wheel-end torque change, and the change in the wheel-end torque of the TMR is the second wheel-end torque change. The torque from the TMR to the wheel end equals the difference between the total requested wheel-end torque and the torque from the TMF to the wheel end. During the process of controlling the dynamic torque change, the change in the sum of the first wheel-end torque change and the second wheel-end torque change is less than or equal to the second torque change threshold. That is, the change in the total requested wheel-end torque is less than or equal to the second torque change threshold. The second torque change threshold is set based on the actual situation of the vehicle. For example, the sum of the second wheel-end torque change and the first wheel-end torque change remains unchanged or changes minimally.

In the embodiments of the present disclosure, during the change of the wheel-end torque, the change trend of the second wheel-end torque change is opposite to that of the first wheel-end torque change, but the sum of the two remains unchanged or changes minimally. When the power of the TMF is interrupted, the wheel-end torque of the TMR is used to compensate, which effectively avoids power loss during the driving of the vehicle, thus improving the vehicle stability and safety during driving.

In process 203, a first torque adjustment step size and a second torque adjustment step size are determined based on the first wheel-end torque change, the second wheel-end torque change, and the driving scenario, the torque of the vehicle is adjusted using the first torque adjustment step size and the second torque adjustment step size, and movement of the vehicle is controlled based on the adjusted torque.

In some exemplary embodiments of the present disclosure, after determining the first wheel-end torque change and the second wheel-end torque change, a first reference torque step size and a second reference torque step size can further be determined based on the first wheel-end torque change, the second wheel-end torque change, and the parameters of the vehicle. The first reference torque step size is positively correlated with the first wheel-end torque change, and the second reference torque step size is positively correlated with the second wheel-end torque change. That is, a larger wheel-end torque change corresponds to a larger reference torque step size, while a smaller wheel-end torque change corresponds to a smaller reference torque step size.

The total response time for the first wheel-end torque change and the second wheel-end torque change is determined based on the technical parameter of the vehicle. The total response time for the wheel-end torque change is the total time from the driver input (for example, pressing the accelerator pedal) to the moment at which the vehicle actually produces the corresponding torque change.

A response period is determined based on the total response time for the wheel-end torque change. The total response time for the wheel-end torque change includes a plurality of response periods. When determining the number of response periods, the number may be set based on the actual situation of the vehicle. The first reference torque step size and the second reference torque step size are determined by using the ratio of the first wheel-end torque change to the response period and the ratio of the second wheel-end torque change to the response period. For example, the total response time is 200 ms and the response period is 10 ms, the number of response periods is determined to be 20. The ratio of the first wheel-end torque change to 20 and the ratio of the second wheel-end torque change to 20 are used as the first reference torque step size and the second reference torque step size.

For example, in a case where the driving scenario changes, the first reference torque step size and the second reference torque step size may be adjusted based on the driving scenario, to obtain the first torque adjustment step size and the second torque adjustment step size.

During the process of determining the number of response periods, the first reference torque step size and the second reference torque step size may be further adjusted based on parameters corresponding to the driving scenario of the vehicle. By conducting road tests and data analysis under different driving conditions, torque response curves for various speeds, loads, and road conditions are obtained. The torque response curves are used to assist in adjusting the first reference torque step size and the second reference torque step size, to obtain the first torque adjustment step size and the second torque adjustment step size.

For example, if the vehicle is driving on poor road conditions requiring frequent torque adjustments, the first reference torque step size and the second reference torque step size are reduced, that is, the number of response periods is increased, thereby enhancing the vehicle stability. For another example, if the vehicle is driving on good road conditions, the first reference torque step size and the second reference torque step size are increased, that is, the number of response periods is decreased, thereby enhancing the driving smoothness and comfort.

The embodiments of the present disclosure, by dynamically adjusting the first torque step size and the second torque adjustment step size, not only enable the vehicle to respond quickly to torque adjustments, but also allow the vehicle to adapt to different road conditions and drive modes, thereby enhancing the vehicle stability and safety.

In some exemplary embodiments of the present disclosure, prior to adjusting the vehicle torque based on the first wheel-end torque change and second wheel-end torque change, drive torques corresponding to the traction motors may also be determined. The process of determining the drive torques corresponding to the traction motors includes: determining a first drive torque and a second drive torque based on the first wheel-end torque change, the second wheel-end torque change, the first wheel-end torque, the second wheel-end torque, and overall gear ratios from the traction motors to wheel ends. The first drive torque is a torque corresponding to a first traction motor, and the second drive torque is a torque corresponding to a second traction motor; and sequentially increasing or decreasing the first drive torque by a first number of the first torque adjustment step sizes, and sequentially decreasing or increasing the second drive torque by a second number of the second torque adjustment step sizes.

An example in which the first wheel-end torque change is the torque change from the TMF to the wheel end and the second wheel-end torque change is the torque change from the TMR to the wheel end is used. The overall gear ratio from the traction motor to the wheel end is a parameter representing the ratio between the traction motor speed and the wheel speed. The overall gear ratio from the traction motor to the wheel end reflects the process that the output speed of the motor is transmitted to the wheel through the transmission system and affects the final speed of the wheel. For example, based on the driving parameters of the vehicle such as motor parameters, transmission parameters, and differential parameters, the overall gear ratio from the traction motor to the wheel end is obtained by querying a table.

The requested torque of the traction motor is determined using the overall gear ratio and the torque from the traction motor to the wheel end. The calculation of the requested torque of the second traction motor is used as an example for description. The overall gear ratio from the traction motor to the wheel end includes a second overall gear ratio R2. The first wheel-end torque k1 and a second drive torque T2 satisfy T2 = (k - k1) / R2. k is the requested wheel-end torque.

For example, the first traction motor is the TMF, the second traction motor is the TMR, and the second drive torque T2 is the requested torque of the TMR. That is, the requested torque of the TMR = (total requested wheel-end torque - the torque from the TMF to the wheel end) / overall gear ratio from the TMR to the wheel end. The torque from the TMF to the wheel end = the actual torque of the TMF * the gear ratio of the transmission * the main reduction ratio of the TMF.

After determining the first drive torque and the second drive torque, the first torque adjustment step size and the second torque adjustment step size may also be used to control the torque change of the vehicle. For example, the first drive torque of the vehicle is sequentially increased or decreased by a first number of the first torque adjustment step sizes, and the second drive torque of the vehicle is sequentially decreased or increased by a second number of the second torque adjustment step sizes. The first number and the second number may be the same or different. For example, the first number and the second number are different. The first number is 15 and the second number is 20, and the first drive torque needs to be increased while the second drive torque needs to be decreased. In this case, the first drive torque is sequentially increased by one first torque adjustment step size each time until the count of added first torque adjustment step sizes reaches 15. Similarly, the second drive torque is sequentially decreased by one second torque adjustment step size each time until the count of subtracted second torque adjustment step sizes reaches 20.

According to the embodiments of the present disclosure, when the drive mode or the gear changes, the first wheel-end torque change and the second wheel-end torque change are determined based on the requested wheel-end torque, the first wheel-end torque, the second wheel-end torque, and the correction coefficient. The correction coefficient is determined based on the driving scenario and the driving parameter, thereby obtaining more accurate correction coefficients in different driving scenarios. The change trends of the first wheel-end torque change and the second wheel-end torque change are opposite, which avoids torque interruption during the change of the gear or drive mode, thus improving the driving stability and safety of the vehicle. Furthermore, the vehicle torque is adjusted using the first torque adjustment step size and the second torque adjustment step size, which improves the smoothness of the vehicle torque change process to a certain extent.

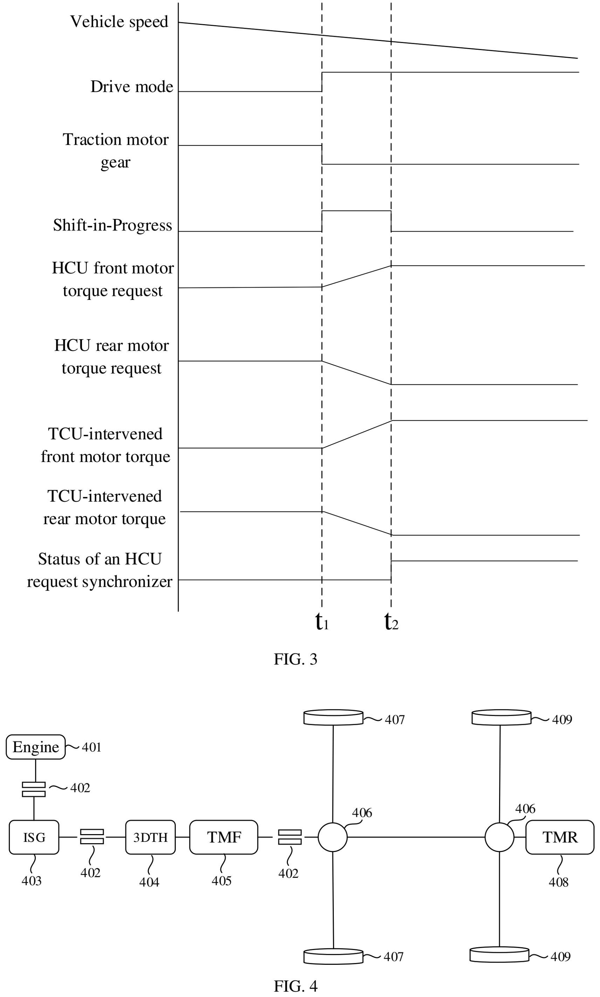

To better illustrate the vehicle torque control method, a process of controlling the vehicle torque change when the vehicle speed decreases is used as an example for description. FIG. 3 is a schematic diagram of a vehicle torque control process according to some embodiments of the present disclosure. As illustrated in FIG. 3, during vehicle driving, the vehicle speed decreases. When the vehicle speed drops to a speed threshold, a change in the drive mode and a change in the gear are triggered. For example, at a moment t₁, a transition in the drive mode is triggered, for example, a drive mode signal is detected to transition from a low level to a high level; or at a moment t₁, a gear shift of the traction motor is triggered, for example, the gear of the traction motor shifts from a high gear to a low gear.

The gear shift process is used herein for description. When a Shift-in-Progress signal is at a low level, the vehicle moves in the current gear. When the Shift-in-Progress signal is at a high level, it indicates that the vehicle is undergoing a gear shift. That is, during the time period from t₁ to t₂, the vehicle shifts from one gear to another, and at the moment t₂, the gear shift is completed.

During the gear shift process, the HCU transmits the change status of the requested drive gear to the TCU, and the TCU controls the vehicle torque. The HCU generates an HCU front motor torque request signal and an HCU rear motor torque request signal based on the change status of the requested drive gear, and transmits the front motor torque request signal and the rear motor torque request signal to the TCU. The TCU controls the torques of the TMF and the TMR based on the front motor torque request signal and the rear motor torque request signal, respectively. The change trends of the torques of the TMF and the TMR are opposite. For example, during the gear shift, the torque of the TMF increases, while the torque of the TMR decreases. At the end of the gear shift, the status of an HCU request synchronizer changes, for example, the status transition of the HCU request synchronizer indicates the gear shift is completed.

FIG. 4 is a schematic diagram of a vehicle according to some embodiments of the present disclosure. As illustrated in FIG. 4, the vehicle includes an engine 401, a clutch 402, an integrated starter and generator (ISG) 403, a three-speed hybrid drive transmission (3DHT) 404, a TMF 405, a differential 406, front wheels 407, a TMR 408, and rear wheels 409.

The process of controlling vehicle torque change during a drive mode change process is used as an example for description. During the drive mode change, the engine 401 is disconnected from the transmission system via the clutch 402, and the TMF 405 is disconnected from the front wheels 407. The ISG 403 controls the speed of the engine 401, preparing for the drive mode change process. In other words, the TMF 405 is not engaged in propulsion at this stage. The 3DHT 404 selects the corresponding drive mode based on a driving parameter of the vehicle.

For example, the drive mode selected based on the driving parameter of the vehicle is that both the TMF 405 and the TMR 408 drive the vehicle. The vehicle control system transmits control signals to the TMF 405 and the TMR 408 to adjust torque output of the motors. For example, by adjusting the torque changes (either an increase or a decrease) of the TMF 405 and the TMR 408, the torque output of the motors is adjusted, thereby assisting in the completion of the drive mode change.

After the drive mode is changed, the clutch 402 is re-engaged, and the power of the engine 401 is transmitted through the 3DHT 404 and the differential 406, and finally acts on the front wheels 407 and the rear wheels 409, propelling the vehicle to continue driving with the changed drive mode and the changed torque. The entire drive mode change process, achieved through the coordinated operation of the various components, enables smooth adjustment of the vehicle torque, ensuring driving comfort and safety.

It should be noted that the process in which the TMF and the TMR control the increase or decrease of the torque has been described in detail in processes 201 to 203, and details are not repeated herein.

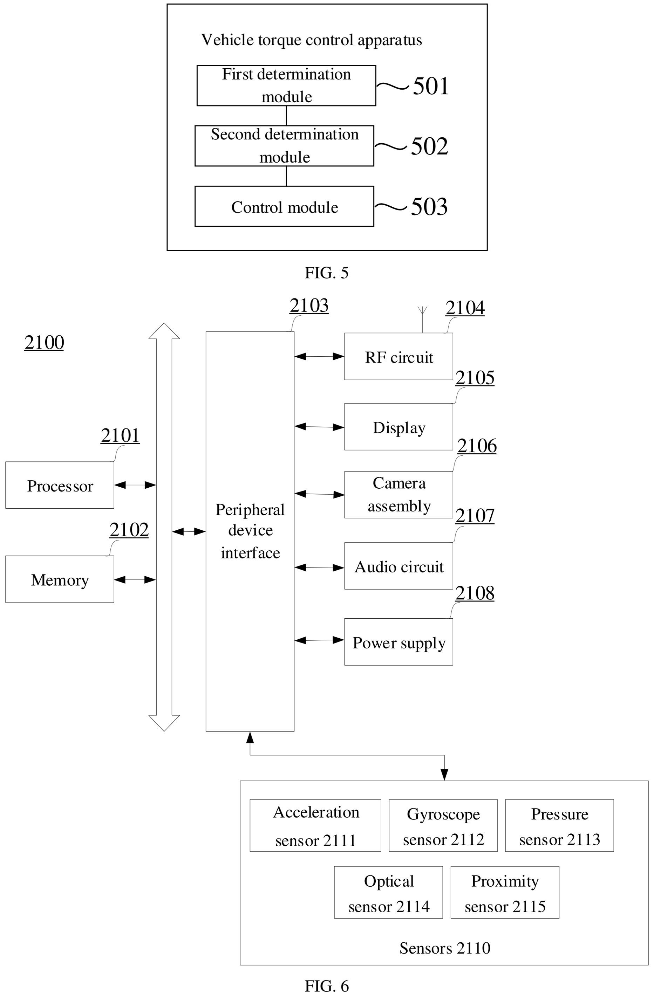

The present disclosure further provides a vehicle torque control apparatus. FIG. 5 is a schematic diagram of a vehicle torque control apparatus according to some embodiments of the present disclosure. As illustrated in FIG. 5, the apparatus includes:
a first determination module 501, configured to determine at least one of a drive mode or a gear of a vehicle based on a driving parameter of the vehicle;
a second determination module 502, configured to: in a case where the at least one of the drive mode or the gear changes, determine a first wheel-end torque change and a second wheel-end torque change based on a requested wheel-end torque, a first wheel-end torque, a second wheel-end torque, and a correction coefficient, wherein a change trend of the second wheel-end torque change is opposite to a change trend of the first wheel-end torque change, the requested wheel-end torque is a wheel-end torque to which the vehicle is to be switched, the first wheel-end torque and the second wheel-end torque are torques corresponding to different traction motors prior to the change of the drive mode or the gear, and the correction coefficient is determined based on a driving scenario and the driving parameter of the vehicle; and
a control module 503, configured to: determine a first torque adjustment step size and a second torque adjustment step size based on the first wheel-end torque change, the second wheel-end torque change, and the driving scenario, adjust a torque of the vehicle using the first torque adjustment step size and the second torque adjustment step size, and control movement of the vehicle based on the adjusted torque.

In some embodiments, the second determination module 502 is further configured to: determine a first correction factor and a second correction factor based on the driving scenario and the driving parameter of the vehicle, and determine the correction coefficient using the first correction factor and the second correction factor.

The second determination module 502 is configured to determine a third wheel-end torque change and a fourth wheel-end torque change based on the requested wheel-end torque, the first wheel-end torque, the second wheel-end torque, and a first torque change threshold; and acquiring the first wheel-end torque change and the second wheel-end torque change by correcting the third wheel-end torque change and the fourth wheel-end torque change based on the correction coefficient.

In some embodiments, the control module 503 is configured to: determine a first reference torque step size and a second reference torque step size based on the first wheel-end torque change, the second wheel-end torque change, and a technical parameter of the vehicle, wherein the first reference torque step size is positively correlated with the first wheel-end torque change, and the second reference torque step size is positively correlated with the second wheel-end torque change; and in a case where the driving scenario changes, acquiring the first torque adjustment step size and the second torque adjustment step size by adjusting the first reference torque step size and the second reference torque step size based on the driving scenario.

In some embodiments, a change in a sum of the second wheel-end torque change and the first wheel-end torque change is less than or equal to a second torque change threshold.

In some embodiments, the control module 503 is further configured to determine a first drive torque and a second drive torque based on the first wheel-end torque change, the second wheel-end torque change, the first wheel-end torque, the second wheel-end torque, and overall gear ratios from the traction motors to wheel ends, wherein the first drive torque is a torque corresponding to a first traction motor, and the second drive torque is a torque corresponding to a second traction motor.

The control module 503 is configured to sequentially increase or decrease the first drive torque of the vehicle by a first number of the first torque adjustment step sizes, and sequentially decrease or increase the second drive torque of the vehicle by a second number of the second torque adjustment step sizes.

In some embodiments, the change of the drive mode includes, but is not limited to at least one of the following items: the drive mode of the vehicle changes from single-group traction motor driving to two-group traction motor driving, the drive mode of the vehicle changes from two-group traction motor driving to single-group traction motor driving, or any traction motor fails.

In a possible implementation, the second control module 502 is configured to determine a driver intention and a base torque using the driving parameter; and acquire the requested wheel-end torque by adjusting the base torque based on the driver intention.

According to the vehicle torque control apparatus in the embodiments of the present disclosure, in a case where the drive mode or gear changes, the first wheel-end torque change and the second wheel-end torque change are determined based on the requested wheel-end torque, the first wheel-end torque, the second wheel-end torque, and the correction coefficient. The correction coefficient is determined based on the driving scenario and the driving parameter, thereby achieving more accurate correction coefficients in different driving scenarios. The change trends of the first wheel-end torque change and the second wheel-end torque change are opposite, which avoids torque interruption during the change of the gear or drive mode, thus improving the driving stability and safety of the vehicle. Furthermore, the vehicle torque is adjusted using the first torque adjustment step size and the second torque adjustment step size, which improves the smoothness of the vehicle torque change process to a certain extent.

It should be understood that when the apparatus provided above implements its functions, division of the foregoing function modules is merely used as an example. In practice, the functions may be allocated to and completed by different function modules as required, that is, an internal structure of the apparatus is divided into different function modules to complete all or some of the functions. In addition, the apparatus provided in the above embodiments belongs to the same conception as the embodiments of the method. For a specific implementation process, reference may be made to the method embodiments, and details are not described herein again.

FIG. 6 is a schematic structural diagram of a terminal device 2100 according to some embodiments of the present disclosure. The terminal device 2100 may be any type of electronic device product capable of human-computer interaction with users through one or more means such as a keyboard, touchpad, remote control, voice interaction, or handwriting device. Examples include personal computers (PCs), mobile phones, smartphones, personal digital assistants (PDAs), wearable devices, pocket PCs (PPCs), tablets, smart vehicle infotainment systems, smart TVs, smart speakers, and smartwatches.

Generally, the terminal device 2100 includes a processor 2101 and a memory 2102.

The processor 2101 may include one or more processing cores, for example, a 4-core processor or an 8-core processor. The processor 2101 may be implemented by using at least one hardware form of digital signal processing (DSP), a field-programmable gate array (FPGA), or a programmable logic array (PLA). The processor 2101 may alternatively include a main processor and a coprocessor. The main processor is configured to process data in an awake state, also referred to as a central processing unit (CPU), and the coprocessor is a low-power processor configured to process data in a standby state. In some embodiments, the processor 2101 may be integrated with a graphics processing unit (GPU). The GPU is configured to be responsible for rendering and drawing content that a display needs to display. In some embodiments, the processor 2101 may further include an artificial intelligence (AI) processor. The AI processor is configured to process computing operations related to machine learning.

The memory 2102 may include one or more computer-readable storage media, which may be non-transitory. The memory 2102 may further include a high-speed random access memory (RAM) and a non-volatile memory such as one or more magnetic disk storage devices and a flash storage device. In some embodiments, the non-transitory computer-readable storage medium in the memory 2102 is configured to store at least one instruction. The at least one instruction is executed by the processor 2101 to implement the vehicle torque control method according to the method embodiments of the present disclosure.

In some embodiments, the terminal device 2100 may further optionally include a peripheral device interface 2103 and at least one peripheral device. The processor 2101, the memory 2102, and the peripheral device interface 2103 may be connected through a bus or a signal cable. Each peripheral device may be connected to the peripheral device interface 2103 through a bus, a signal cable, or a circuit board. Specifically, the peripheral device includes: at least one of a radio frequency (RF) circuit 2104, a display 2105, a camera assembly 2106, an audio circuit 2107, or a power supply 2108.

The peripheral device interface 2103 may be configured to connect at least one peripheral device related to input/output (I/O) to the processor 2101 and the memory 2102. In some embodiments, the processor 2101, the memory 2102, and the peripheral device interface 2103 are integrated into the same chip or circuit board; in some other embodiments, any one or two of the processor 2101, the memory 2102, and the peripheral device interface 2103 may be implemented on an independent chip or circuit board. This is not limited in the embodiments.

The RF circuit 2104 is configured to receive and transmit an RF signal, also referred to as an electromagnetic signal. The RF circuit 2104 communicates with a communications network and another communications device by using the electromagnetic signal. The RF circuit 2104 converts an electric signal into an electromagnetic signal for transmission, or converts a received electromagnetic signal into an electric signal. In some embodiments, the RF circuit 2104 includes an antenna system, an RF transceiver, one or more amplifiers, a tuner, an oscillator, a digital signal processor, a codec chip set, a subscriber identity module card, and the like. The RF circuit 2104 may communicate with another terminal device through at least one wireless communication protocol. The wireless communication protocol includes, but is not limited to: the World Wide Web, a metropolitan area network, an intranet, generations of mobile communication networks (2G, 3G, 4G, and 5G), a wireless local area network and/or a wireless fidelity (Wi-Fi) network. In some embodiments, the RF circuit 2104 may further include a near field communication (NFC)-related circuit. This is not limited in the present disclosure.

The display 2105 is configured to display a user interface (UI). The UI may include a graph, text, an icon, a video, and any combination thereof. In a case where the display 2105 is a touch display, the display 2105 is further capable of acquiring a touch signal on or above a surface of the display 2105. The touch signal may be input as a control signal to the processor 2101 for processing. In this case, the display 2105 may be further configured to provide a virtual button and/or a virtual keyboard, which is also referred to as a soft button and/or a soft keyboard. In some embodiments, there may be one display 2105, disposed on a front panel of the terminal device 2100. In some other embodiments, there may be at least two displays 2105, disposed on different surfaces of the terminal device 2100 respectively or in a folded design. In some other embodiments, the display 2105 may be a flexible display, disposed on a curved surface or a folded surface of the terminal device 2100. Even, the display 2105 may be further set in a non-rectangular irregular pattern, namely, a special-shaped screen. The display 2105 may be prepared by using materials such as a liquid crystal display (LCD), an organic light-emitting diode (OLED), or the like.

The camera assembly 2106 is configured to acquire an image or a video. In some embodiments, the camera assembly 2106 includes a front-facing camera and a rear-facing camera. Generally, the front-facing camera is disposed on a front panel of the terminal device 2100, and the rear-facing camera is disposed on a back surface of the terminal device 2100. In some embodiments, there are at least two rear-facing cameras, which are respectively any one of a main camera, a depth-of-field camera, a wide-angle camera, and a telephoto camera, to implement a background blurring function by fusing the main camera and the depth-of-field camera, and panoramic shooting and virtual reality (VR) shooting functions or other fusing shooting functions by fusing the main camera and the wide-angle camera. In some embodiments, the camera assembly 2106 may further include a flash. The flash may be a single color temperature flash or a double color temperature flash. The double color temperature flash is a combination of a warm light flash and a cold light flash, and may be used for light compensation under different color temperatures.

The audio circuit 2107 may include a microphone and a speaker. The microphone is configured to collect sound waves of a user and an environment, and convert the sound waves into electric signals and input the electrical signals into the processor 2101 for processing, or input the electrical signals into the RF circuit 2104 to implement voice communication. For the purpose of stereo sound collection or noise reduction, there may be a plurality of microphones, respectively disposed at different parts of the terminal device 2100. The microphone may be further an array microphone or an omnidirectional acquisition microphone. The speaker is configured to convert electric signals from the processor 2101 or the RF circuit 2104 into sound waves. The speaker may be a conventional thin-film speaker or a piezoelectric ceramic speaker. In a case where the speaker is the piezoelectric ceramic speaker, electric signals not only can be converted into sound waves audible to human, but also can be converted into sound waves inaudible to human for ranging and other purposes. In some embodiments, the audio circuit 2107 may further include an earphone jack.

The power supply 2108 is configured to supply power for various components in the terminal device 2100. The power supply 2108 may be an alternating current, a direct current, a disposable battery, or a rechargeable battery. When the power supply 2108 includes the rechargeable battery, the rechargeable battery may be a wired rechargeable battery or a wireless rechargeable battery. The wired rechargeable battery is a battery charged through a wired circuit, and the wireless rechargeable battery is a battery charged through a wireless coil. The rechargeable battery may be further configured to support a fast charge technology.

In some embodiments, the terminal device 2100 further includes one or more sensors 2110. The one or more sensors 2110 include, but are not limited to: an acceleration sensor 2111, a gyroscope sensor 2112, a pressure sensor 2113, an optical sensor 2114, and a proximity sensor 2115.

The acceleration sensor 2111 may detect acceleration on three coordinate axes of a coordinate system established by the terminal device 2100. For example, the acceleration sensor 2111 may be configured to detect components of gravity acceleration on the three coordinate axes. The processor 2101 may control, according to a gravity acceleration signal collected by the acceleration sensor 2111, the display 2105 to display the user interface in a landscape view or a portrait view. The acceleration sensor 2111 may be further configured to collect game or user motion data.

The gyroscope sensor 2112 may detect a body direction and a rotation angle of the terminal device 2100. The gyroscope sensor 2112 may cooperate with the acceleration sensor 2111 to collect a 3D action performed by the user on the terminal device 2100. The processor 2101 may implement the following functions according to the data collected by the gyroscope sensor 2112: motion sensing (such as changing the UI according to a tilt operation of the user), image stabilization at shooting, game control, and inertial navigation.

The pressure sensor 2113 may be disposed on a side frame of the terminal device 2100 and/or a lower layer of the display 2105. In a case where the pressure sensor 2113 is disposed on the side frame of the terminal device 2100, a holding signal of the user on the terminal device 2100 may be detected. The processor 2101 performs left and right hand recognition or a quick operation according to the holding signal collected by the pressure sensor 2113. In a case where the pressure sensor 2113 is disposed on the lower layer of the display 2105, the processor 2101 controls an operable control on the UI according to a pressure operation of the user on the display 2105. The operable control includes at least one of a button control, a scroll bar control, an icon control or a menu control.

The optical sensor 2114 is configured to acquire ambient light intensity. In some embodiments, the processor 2101 may control display brightness of the display 2105 according to the ambient light intensity collected by the optical sensor 2114. Specifically, when the ambient light intensity is relatively high, the display brightness of the display 2105 is turned up. When the ambient light intensity is relatively low, the display brightness of the display 2105 is turned down. In some embodiments, the processor 2101 may further dynamically adjust a camera parameter of the camera assembly 2106 according to the ambient light intensity collected by the optical sensor 2114.

The proximity sensor 2115, also referred to as a distance sensor, is usually disposed on the front panel of the terminal device 2100. The proximity sensor 2115 is configured to collect a distance between a user and the front surface of the terminal device 2100. In some embodiments, when the proximity sensor 2115 detects that the distance between the user and the front surface of the terminal device 2100 gradually becomes smaller, the display 2105 is controlled by the processor 2101 to switch from a screen-on state to a screen-off state. In a case where the proximity sensor 2115 detects that the distance between the user and the front surface of the terminal device 2100 gradually becomes larger, the display 2105 is controlled by the processor 2101 to switch from the screen-off state to the screen-on state.

A person skilled in the art may understand that the structure illustrated in FIG. 6 does not constitute a limitation to the terminal device 2100, and the terminal may include more or fewer components than those illustrated in the figure, or some components may be combined, or a different component deployment may be used.

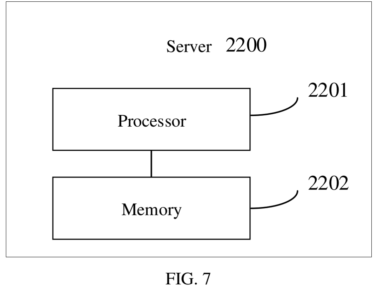

FIG. 7 is a schematic structural diagram of a server according to some embodiments of the present disclosure. The server 2200 may vary greatly due to different configurations or performance and may include at least one processor 2201 and at least one memory 2202. The at least one memory 2202 stores at least one piece of program code, the at least one piece of program code being loaded and executed by the at least one processor 2201 to implement the vehicle torque control method according to the above method embodiments. Certainly, the server 2200 may further include components such as a wired or wireless network interface, a keyboard, and an I/O interface for input and output. The server 2200 may further include other components for implementing device functions. Details are not described herein.

In some embodiments, a computer-readable storage medium is further provided. The storage medium stores at least one piece of program code, and the at least one piece of program code, when loaded and executed by a processor, causes a computer to perform any of the vehicle torque control methods as described above.

For example, the computer-readable storage medium may be a read-only memory (ROM), a random access memory (RAM), a compact disc ROM (CD-ROM), a magnetic tape, a floppy disk, an optical data storage device, or the like.

In some embodiments, a computer program or computer program product is further provided. The computer program or computer program product stores at least one computer instruction, and the at least one computer instruction, when loaded and executed by a processor, causes a computer to perform any of the vehicle torque control methods as described above.

It is to be noted that the information (including but not limited to device information of a user, personal information of the user and the like), data (including but not limited to data for analysis, data for storage, data for exhibition and the like), and signals in the present disclosure are authorized by the user or fully authorized by each party, and the related data are acquired, used and processed according to relevant laws, regulations, and standards of the applicable countries and regions. For example, the driving parameters, requested wheel-end torque, and the like of the vehicle involved in the present disclosure are all obtained under full authorization.

It should be understood that the term "a plurality of" herein means two or more. The term "and/or" describes the association relationship between associated objects, and it indicates three types of relationships may be present. For example, the phrase "A and/or B" means (A), (B), or (A and B). The character "/" usually indicates an "or" relationship between associated objects.

The above descriptions are merely exemplary embodiments of the present disclosure and are not intended to limit the present disclosure. Any modification, equivalent replacement, and improvement within the spirit and principle of the present disclosure shall be included within the protection scope of the present disclosure.

## Claims

1. A vehicle torque control method, comprising:
determining at least one of a drive mode or a gear of a vehicle based on a driving parameter of the vehicle;
in a case where the at least one of the drive mode or the gear changes, determining a first wheel-end torque change and a second wheel-end torque change based on a requested wheel-end torque, a first wheel-end torque, a second wheel-end torque, and a correction coefficient, wherein a change trend of the second wheel-end torque change is opposite to a change trend of the first wheel-end torque change, the requested wheel-end torque is a wheel-end torque to which the vehicle is to be switched, the first wheel-end torque and the second wheel-end torque are torques corresponding to different traction motors prior to the change of the drive mode or the gear, and the correction coefficient is determined based on a driving scenario and the driving parameter of the vehicle; and
determining a first torque adjustment step size and a second torque adjustment step size based on the first wheel-end torque change, the second wheel-end torque change, and the driving scenario, adjusting a torque of the vehicle using the first torque adjustment step size and the second torque adjustment step size, and controlling movement of the vehicle based on the adjusted torque.

2. The vehicle torque control method according to claim 1, wherein prior to determining the first wheel-end torque change and the second wheel-end torque change based on the requested wheel-end torque, the first wheel-end torque, the second wheel-end torque, and the correction coefficient, the method further comprises:
determining a first correction factor and a second correction factor based on the driving scenario and the driving parameter of the vehicle, and determining the correction coefficient using the first correction factor and the second correction factor; and
determining the first wheel-end torque change and the second wheel-end torque change based on the requested wheel-end torque, the first wheel-end torque, the second wheel-end torque, and the correction coefficient comprises:
determining a third wheel-end torque change and a fourth wheel-end torque change based on the requested wheel-end torque, the first wheel-end torque, the second wheel-end torque, and a first torque change threshold; and
acquiring the first wheel-end torque change and the second wheel-end torque change by correcting the third wheel-end torque change and the fourth wheel-end torque change based on the correction coefficient.

3. The vehicle torque control method according to claim 1, wherein determining the first torque adjustment step size and the second torque adjustment step size based on the first wheel-end torque change, the second wheel-end torque change, and the driving scenario comprises:
determining a first reference torque step size and a second reference torque step size based on the first wheel-end torque change, the second wheel-end torque change, and a technical parameter of the vehicle, wherein the first reference torque step size is positively correlated with the first wheel-end torque change, and the second reference torque step size is positively correlated with the second wheel-end torque change; and
in a case where the driving scenario changes, acquiring the first torque adjustment step size and the second torque adjustment step size by adjusting the first reference torque step size and the second reference torque step size based on the driving scenario.

4. The vehicle torque control method according to claim 1, wherein a change in a sum of the second wheel-end torque change and the first wheel-end torque change is less than or equal to a second torque change threshold.

5. The vehicle torque control method according to any one of claims 1 to 4, wherein after determining the first torque adjustment step size and the second torque adjustment step size based on the first wheel-end torque change, the second wheel-end torque change, and the driving scenario, the method further comprises:
determining a first drive torque and a second drive torque based on the first wheel-end torque change, the second wheel-end torque change, the first wheel-end torque, the second wheel-end torque, and overall gear ratios from the traction motors to wheel ends, wherein the first drive torque is a torque corresponding to a first traction motor, and the second drive torque is a torque corresponding to a second traction motor; and
adjusting the torque of the vehicle using the first torque adjustment step size and the second torque adjustment step size comprises:
sequentially increasing or decreasing the first drive torque of the vehicle by a first number of the first torque adjustment step sizes, and sequentially decreasing or increasing the second drive torque of the vehicle by a second number of the second torque adjustment step sizes.

6. The vehicle torque control method according to any one of claims 1 to 4, wherein the change of the drive mode comprises at least one of the following items: the drive mode of the vehicle changes from single-group traction motor driving to two-group traction motor driving, the drive mode of the vehicle changes from two-group traction motor driving to single-group traction motor driving, or any traction motor fails.

7. The vehicle torque control method according to any one of claims 1 to 4, wherein prior to determining the first wheel-end torque change and the second wheel-end torque change based on the requested wheel-end torque, the first wheel-end torque, the second wheel-end torque, and the correction coefficient, the method further comprises:
determining a driver intention and a base torque using the driving parameter; and
acquiring the requested wheel-end torque by adjusting the base torque based on the driver intention.

8. A vehicle torque control apparatus, comprising:
a first determination module, configured to determine at least one of a drive mode or a gear of a vehicle based on a driving parameter of the vehicle;
a second determination module, configured to: in a case where the at least one of the drive mode or the gear changes, determine a first wheel-end torque change and a second wheel-end torque change based on a requested wheel-end torque, a first wheel-end torque, a second wheel-end torque, and a correction coefficient, wherein a change trend of the second wheel-end torque change is opposite to a change trend of the first wheel-end torque change, the requested wheel-end torque is a wheel-end torque to which the vehicle is to be switched, the first wheel-end torque and the second wheel-end torque are torques corresponding to different traction motors prior to the change of the drive mode or the gear, and the correction coefficient is determined based on a driving scenario and the driving parameter of the vehicle; and
a control module, configured to: determine a first torque adjustment step size and a second torque adjustment step size based on the first wheel-end torque change, the second wheel-end torque change, and the driving scenario, adjust a torque of the vehicle using the first torque adjustment step size and the second torque adjustment step size, and control movement of the vehicle based on the adjusted torque.

9. A computer device, comprising a processor and a memory, wherein the memory is configured to store at least one piece of program code, which when loaded and executed by the processor, causes the computer device to perform the vehicle torque control method as defined in any one of claims 1 to 7.

10. A computer-readable storage medium, storing at least one piece of program code, wherein the at least one piece of program code, when loaded and executed by a processor, causes a computer to perform the vehicle torque control method as defined in any one of claims 1 to 7.

11. A computer program product, storing at least one computer instruction, wherein the at least one computer instruction, when loaded and executed by a processor, causes a computer to perform the vehicle torque control method as defined in any one of claims 1 to 7.

12. A vehicle, comprising:
a vehicle body; and
a vehicle control system, configured to perform, on the vehicle body, the vehicle torque control method as defined in any one of claims 1 to 7.
